# FASCICULE DE BREVET EUROPEEN

(11) **EP 2 396 137 B1**
(45) Date de publication et mention de la délivrance du brevet: **24.08.2016**
(21) Numéro de dépôt: 10708272.9
(22) Date de dépôt: 03.02.2010
(51) Int. Cl.: B23K 9/167, B23K 35/38

(54) **PROCEDE DE SOUDAGE A L'ARC SOUS DOUBLE FLUX GAZEUX, AVEC FLUX CENTRAL CONTENANT DE L'ARGON ET DE L'HYDROGENE ET LE FLUX DE GAINAGE COMPRENANT DE L'ARGON ET DU DIOXYDE DE CARBONE**
VERFAHREN ZUM BOGENSCHWEISSEN MIT DOPPELTEM GASSTROM, MIT EINEM MITTENSTROM MIT ARGON UND WASSERSTOFF UND EINEM HÜLLFLUSS MIT ARGON UND KOHLENDIOXID
METHOD OF ARC WELDING WITH A DUAL GAS FLOW, WITH A CENTRAL FLOW CONTAINING ARGON AND HYDROGEN, AND A WITH A SHEATH FLOW INCLUDING ARGON AND CARBON DIOXIDE

(30) Priorité: 11.02.2009 FR 0950845
(43) Date de publication de la demande: 21.12.2011
(73) Titulaire: L'Air Liquide Société Anonyme pour l'Etude et l'Exploitation des Procédés Georges Claude, 75007 Paris (FR)
(72) Inventeur: GADREY, Sébastien, F-58230 Gouloux (FR); PLANCKAERT, Jean-Pierre, F-60240 Monneville (FR)
(74) Mandataire: Pittis, Olivier
(86) Numéro de dépôt international: PCT/FR2010/050172
(87) Numéro de publication internationale: WO 2010/092279

(56) Documents cités:
- JP-A- 7 256 463
- JP-A- 2000 117 449
- JP-A- 2000 237 875
- US-A- 5 821 493
- US-A1- 2004 188 390
- DATABASE WPI Week 198045 Thomson Scientific, London, GB; AN 1980-79592C XP002544159 -& JP 55 122684 A (KYODO SANSO KK) 20 septembre 1980 (1980-09-20)

## Description

L'invention concerne un procédé de soudage à l'arc électrique mettant en oeuvre une torche de soudage à l'arc munie d'une électrode et un double flux de composition permet d'éviter ou au moins minimiser le phénomène de « humping ».

Le document B.J. Bradstreet, Effect of surface tension and metal flow on weld bead formation, Welding Journal, 1968, vol. 47, n° 7, pp. 314-322, traite du phénomène dit de bosselage ou « *humping* » (en anglais) en soudage MIG, alors que le document U. GRATZKE et al., Theoretical approach to the humping phenomenon in welding processus, J. Phys. D. Appl. Phys., 1992, vol. 25, pp. 1640-1647 montre l'existence de ce phénomène en soudage TIG, en arc submergé, en soudage laser et en soudage à faisceau d'électrons.

Les soudures souffrant de « humping » semblent initialement présenter des morphologies aléatoires. Toutefois, une observation détaillée montre que deux types de morphologies peuvent être définies, à savoir :
- morphologie de type région creusée ou « *gouging region morphology* » (GRM),
- et morphologie de type cylindre perlé ou « *beaded cylinder morphology »* (BCM).

Il existe des soudures qui peuvent présenter simultanément des caractéristiques de ces deux morphologies bien que cela soit assez rare.

Il existe quatre théories qui essaient d'expliquer l'apparition du bosselage ou « humping ». Parmi elles, certaines visent spécifiquement à expliquer un type de morphologie du défaut. Ainsi, le modèle du vortex ou tourbillon et l'effet de l'arc ciblent la morphologie de type GRM, et le modèle d'instabilité capillaire cible celle de type BCM, alors que l'approche « Marangoni » ne définit pas de morphologie d'application.

Plus précisément, le modèle de Marangoni, décrit par K.C. Mills et al, Factors affecting variable weld penetration, International Materials Reviews, 1990, vol. 45, n° 4, pp. 185-216, qui passe en revue les facteurs affectant la pénétration de soudure, suggère que le « humping » et les caniveaux pourraient être attribués aux forces de Marangoni créées dans le bain de soudure.

Par ailleurs, le modèle du « vortex » ou tourbillon, décrit par M.L. Lin et al., Influence or arc pressure on weld pool geometry, Welding Journal, 1985, vol. 64, n° 6, 163-169, est basé sur un modèle d'arc tourbillonnaire pour expliquer l'augmentation de la pénétration observée pendant le soudage TIG à fort courant.

Selon le modèle de l'instabilité capillaire, le phénomène de « humping » est basé sur la théorie de Lord Rayleigh sur l'instabilité capillaire d'un cylindre liquide libre de petit diamètre qui, lorsqu'il est suspendu dans le vide, est instable et se sépare en petites gouttes.

Enfin, selon le modèle d'influence de l'arc, durant le fonctionnement normal d'une installation de soudage à l'arc de type MIG ou TIG, il existe une balance des pressions entre l'arc et le bain. A des courants élevés, les forces de trainées du plasma sont suffisamment importantes pour déplacer la majorité du métal en fusion derrière l'arc. Le bilan des forces écrit par P.F. Mendez et al, Penetration and defect formation in high current arc welding, Welding Journal, 2003, vol. 82, n° 10, pp. 296 -306, établit une ligne de transition qui marque le passage de la région creusée à la région de poursuite.

Plusieurs solutions ont été proposées pour tenter d'éviter ce phénomène de « humping » en soudage TIG et ainsi améliorer les performances du procédé, en particulier en soudage TIG automatique.

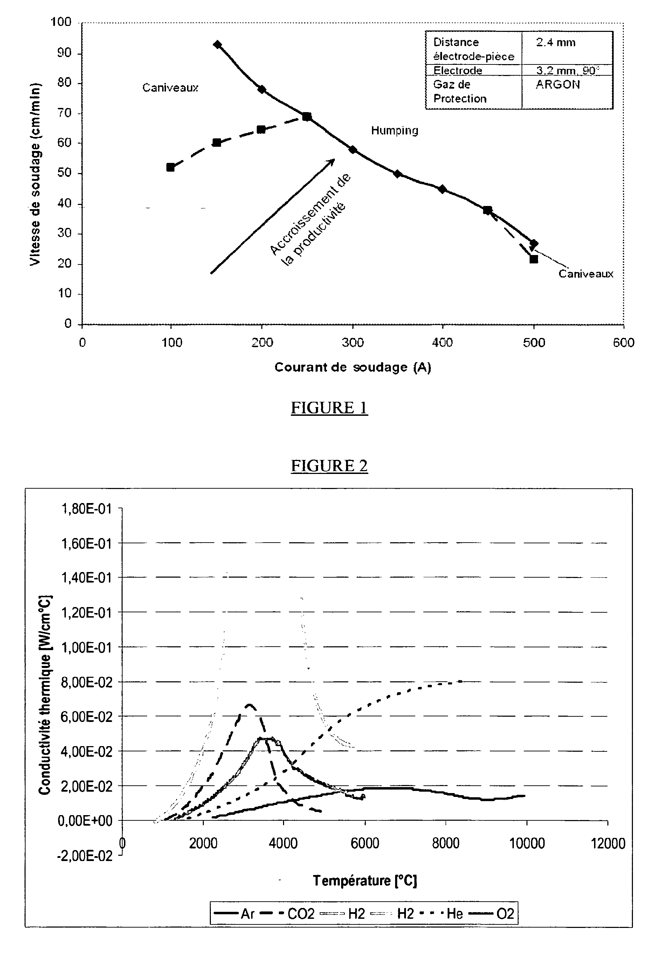

En fait, les vitesses d'avance, c'est-à-dire de soudage, mises en oeuvre en soudage TIG automatique sont souvent limitées par l'occurrence de défauts. Une limite de productivité imposée par le « humping » peut être représentée comme en figure 1.

La figure 1 qui est extraite du document W. Savage, et al, Effect of arc force on defect formation in GTA welding, Welding Journal, 1979, vol. 58, n° 7, pp. 212-224, représente la vitesse de soudage (en ordonnées exprimée en cm/min) en fonction du courant de soudage (en abscisses exprimé en A). Comme on le voit, elle montre les limites d'acceptation des cordons de soudure en termes de vitesse de soudage atteignable à un courant donné. La ligne continue relie différents points de fonctionnement où apparait le phénomène de « humping ». La ligne discontinue correspond à la limite d'apparition d'un autre défaut, à savoir des « caniveaux ». Entre ces deux lignes il existe une zone de productivité où les cordons sont exempts de ces défauts. Pour augmenter la productivité d'un procédé de soudage, il convient donc de décaler la limité d'apparition du « humping » afin d'accroître l'aire de productivité.

Pour ce faire, il a été proposé d'améliorer le contrôle du transfert de l'énergie à la pièce et d'augmenter la surface de la pièce soumise aux flux de chaleur de l'arc TIG via une déviation ou oscillation magnétique de l'arc. En effet, selon la loi de Laplace, l'arc situé entre les deux pôles d'un circuit magnétique d'une bobine subit l'action d'une force F qui a tendance à le déplacer. Si le courant I dans la bobine est inversé, l'induction alors créée change de sens et cela inverse le sens de déplacement de l'arc.

Toutefois, cette solution n'est pas pleinement satisfaisante car ne permet pas d'obtenir d'amélioration de la productivité en soudage TIG automatique. En effet, pour conserver une pénétration correcte à des vitesses élevées, c'est-à-dire environ 2 m/min, il faut mettre en oeuvre une intensité de soudage importante, c'est-à-dire de 250 à 300 A, pour maintenir l'énergie apportée par unité de surface. Or, plus on augmente l'intensité de soudage, plus la composante axiale de la force de Lorentz exercée sur l'arc par le champ B qu'il crée augmente et on obtient alors un arc dit plus rigide. Il devient dés lors plus difficile de déplacer le cône d'arc du fait de la contrainte créée par la bobine.

Par ailleurs, comme montré par B. Keene et al., Effects of interaction between surface active elements on the surface tension of iron, "; Canadian Metallurgical Quarterly, 1982; vol. 21; n°. 4; pp. 393-403; C. Heiple et al., Mechanism for minor element effects on GTA fusion zone geometry, Welding Journal, April 1982, pp. 97-102 ; et *The effect of trace elements on TIG weld penetration*; in Proceedings of TWI international conference: The effects of residual, impurity and micro-alloying elements on weldability and weld properties; London, England; 15-17 November 1983, dans de nombreux cas, les flux de métal liquide, le transfert de chaleur et la forme de la soudure ainsi que ses propriétés sont significativement influencés par la convection de Marangoni. La présence d'un élément tensio-actif, tel que S ou O, dans le bain de soudure altère la tension de surface du solvant. En fait, les éléments tensio-actifs changent la dépendance de la tension de surface à la température (dγ/dT) d'une valeur négative pour les solvants purs à une valeur positive pour les systèmes binaires. Ce changement dans le signe de (dγ/dT) a un impact sur les systèmes.

De là, il est possible d'influencer la forme du cordon en jouant sur la nature et la quantité d'éléments tensio-actifs apportés dans le bain, via un fil fusible contenant ces éléments, de manière à provoquer une inversion du sens de circulation du métal en fusion dans le bain de soudure, sachant que cela apparaît dans les aciers en présence de petites quantités de tensio-actifs.

Cette solution avait été envisagée pour pallier aux défauts du procédé avec flux appelé « A-TIG ». L'obtention de l'effet activant par le flux est indéniable, son inconvénient est qu'il impose une opération supplémentaire de préparation, à savoir le dépôt du flux. En outre, la zone préparée étant de surface supérieure à celle du cordon, la quantité de produit consommée est plus importante que celle qui est effectivement nécessaire. L'utilisation d'un fil fourré pourrait permettre de pallier à ces défauts en amenant les constituants actifs en continu au moment même du soudage par l'intermédiaire de ce fil. La suppression de l'opération de préparation, dépôt du flux au pinceau, peut être appréciable. Cependant les essais ont montré que l'apport de fil entraîne des contraintes opératoires non négligeables, en particulier les faibles vitesses de fil induisent des problèmes de dévidage. Comme avec le flux déposé en surface, l'utilisation des fils activant nécessite des tensions faibles donc des arcs courts. La difficulté est alors de positionner correctement le fil dans le bain. La mise en oeuvre de ce procédé n'est donc pas aisée et la reproductibilité des résultats, à paramètres identiques, n'est pas démontrée puisque la position du fil par rapport à l'électrode et au bain influe sur les paramètres nécessaire à l'obtention de la pénétration.

En soudage TIG mono flux, une optimisation des paramètres physiques de soudage, tel que l'angle d'affûtage de l'électrode, la nature du gaz de protection ou l'inclinaison de la torche peut permettre, dans certains cas, de parvenir à un léger décalage de la vitesse d'apparition du "humping" mais le gain est de très faible amplitude.

Ainsi, une utilisation d'hydrogène ou d'hélium comme gaz de protection en soudage TIG mono-flux de gaz, en lieu et place d'argon, ne permet pas d'augmenter la vitesse limite d'apparition du « humping » en configuration ligne de fusion. Ces gaz permettent uniquement d'étendre la zone d'influence en chaleur et d'obtenir un bain plus fluide grâce à la conductivité thermique élevée de ces gaz.

Cependant, la pression magnétique exercée sur le bain est aussi augmenté puisqu'on assiste à un resserrement de la distribution des lignes de courant du fait du potentiel d'ionisation plus élevé de ces gaz que de l'argon. Ceci se traduit alors par une dépression plus marquée sous l'arc du bain de soudage. Cela correspond à un rejet vers l'arrière plus prononcé du bain et conduit à déplacer les conditions d'apparition du « humping » à un autre point d'équilibre entre pression électromagnétique de l'arc et pression hydrostatique du bain.

Par ailleurs, W. Savage et al., Effect of arc force on defect formation in GTA welding, Welding Journal, 1979, vol. 58, n° 7, pp. 212-224, décrit l'utilisation en soudage TIG double-flux d'un mélange argon-O₂ en gaz périphérique pour permettre une meilleure pénétration.

Toutefois, cette solution n'est pas non plus idéale car si l'action de constriction pneumatique de l'arc, résultant du double flux de gaz, permet d'accroitre la pénétration et donc d'augmenter le volume de métal fondu à largeur de cordon égale, ceci s'accompagne d'une augmentation de vitesse limite constatée peu importante.

De plus, lorsque le gaz périphérique ou annulaire contient de l'O₂, des résultats très différents sont obtenus en termes d'amélioration de la vitesse limite. Ces différences de performance peuvent s'expliquer par des variations au niveau des compositions des tôles d'acier soudées. En effet, les éléments S et O présents dans les aciers ont un effet tensio-actif et l'optimum en O est nécessairement tributaire de la teneur en S. Si la teneur en S est telle que (dγ/dT) est déjà positif, l'apport en O n'a pour effet que d'augmenter la température *T*₀. Le point d'inversion des flux de convection est donc rapproché du centre. Cependant, l'effet bénéfique n'est pas de la même ampleur qu'avec un passage de négatif à positif de (dγ/dT).

En outre, S et O combinent leurs effets mais en fait, il s'agit de S et O « solubles », c'est-à-dire qui ne sont pas liés à un autre élément sous forme d'un composé chimique car si c'est le cas, ils n'ont plus d'influence sur la tension de surface. Il convient donc de distinguer les éléments tensioactifs (Soufre, Oxygène, Sélénium et Tellure), les éléments réactifs qui vont piéger sous forme de composés l'un ou l'autre des éléments tensioactifs et vont donc diminuer la teneur en cet élément à l'état soluble (ex : Al pour l'oxygène, calcium, cérium ou lanthane pour le soufre) et les éléments neutres.

Dans le cas de l'oxygène, il faut porter une attention particulière à l'aluminium puisque l'aluminium est utilisé comme désoxydant lors de l'élaboration de l'acier et le résiduel peut varier fortement selon les coulées et les pratiques de l'aciériste élaborateur.

Ceci rend impossible une quelconque industrialisation de cette méthode puisqu'il n'est pas possible en pratique de contrôler la teneur en oxygène du gaz utilisé en fonction de la quantité à transférer dans le bain sous forme libre.

Par ailleurs on connait du document JP-A-2000237875 un procédé de soudage à l'arc électrique TIG conforme au preambule de la revendication 1, et mettant en oeuvre un flux de gaz central constitué d'argon et d'hydrogène et un flux de gaz de gainage constitué d'argon et d'air.

Enfin, le document US-A-5821493 enseigne un procédé de soudage hybride laser-TIG de pièces revêtues, en particulier de pièces revêtues, en particulier revêtues de zinc.

Le problème qui se pose est des lors de pouvoir éliminer les défauts liés au « humping » et rendre atteignables de plus hautes vitesses d'avance en soudage TIG automatique de l'acier, en particulier des vitesses d'au moins 2 m/min.

La solution est un procédé de soudage à l'arc électrique mettant en oeuvre une torche de soudage à l'arc munie d'une électrode tel que défini dans la revendication 1, dans lequel un flux de gaz central est délivré au contact de l'électrode et un flux de gaz annulaire est délivré périphériquement, c'est-à-dire de manière annulaire, audit premier flux de gaz,
le flux de gaz central étant constitué uniquement d'argon et d'hydrogène (H₂), la teneur en hydrogène étant comprise entre 2 et 8 % en volume,
où le flux de gaz de gainage est constitué uniquement d'argon et de 1.8 à 3% en volume de dioxyde de carbone (CO₂).

Selon le cas, le procédé de l'invention peut comprendre l'une ou plusieurs des caractéristiques suivantes :
- la torche de soudage à l'arc est munie d'une électrode non fusible en tungstène ; il s'agit donc d'une torche TIG.
- le flux de gaz central contient au moins 3 % en volume de H₂.
- le flux de gaz central contient au plus 7% en volume de H₂
- l'on soude une ou plusieurs pièces en acier, notamment en acier inoxydable ou en acier au carbone, en particulier les aciers revêtus d'une couche surfacique de zinc, d'aluminium ou de tout autre matériau destiné à prévenir la corrosion de l'acier considéré.
- la ou les pièces à souder sont choisies parmi les flancs raboutés.
- l'on soude à une vitesse d'au moins 2 m/min.
- la torche est installée sur une installation de soudage automatique ou automatisée.
- les mélanges gazeux contiennent des impuretés inévitables.

La présente invention va être maintenant mieux comprise grâce aux exemples comparatifs suivants, donnés à titre illustratif.

### Exemples

Pour tenter de résoudre le problème de « humpimg » ou bosselage, dans le cadre de la présente invention, on a étudié les flux de métal et la formation du cordon de soudure en présence de plusieurs gaz ou mélanges gazeux différents en soudage TIG double flux automatique.

En particulier, on a testé l'action conjuguée d'un flux de gaz central formé d'un mélange Ar/H₂ et d'un flux de gaz annulaire formé d'un mélange Ar/CO₂ pour augmenter la vitesse de soudage. Ce couplage a été choisi avec soin pour bénéficier des caractéristiques de chaque composant afin d'obtenir les effets souhaités.

Ainsi, l'argon facilite l'amorçage de l'arc et le stabilise grâce à sa faible énergie d'ionisation de 15.8 eV à comparer à 24.6 eV nécessaires pour l'hélium.

L'hydrogène est ajouté pour augmenter l'énergie de l'arc. H₂ étant une molécule diatomique, sa présence dans le mélange gazeux va augmenter l'apport de chaleur à la tôle grâce à l'énergie libérée lors de la recombinaison (4.5 eV/molécule). En outre, la conductivité thermique plus élevée de l'hydrogène augmente également la température du bain.

A hautes températures, c'est-à-dire de plus de 5000 K, 97% molaire du CO₂ du flux de gaz annulaire est dissocié dans l'arc selon l'équation : CO₂ -> CO + 1/2 O₂, laquelle conduit à la formation d'oxygène. Or, l'oxygène est un élément tensio-actif, sa présence dans le métal fondu abaisse la tension de surface du métal. Ainsi, le document B. Keene, Review of data for the surface tension of iron and its binary alloys, International Materials Reviews, 1988, vol. 33, n° 1, pp. 1-37, donne pour un mélange binaire Fe-O, la relation: *γ_{Fe-O}* = γ*_{Fe}* - 7490[at. - %*O*]. L'oxygène formé va donc fluidifier le bain.

La Figure 2 illustre les conductivités thermiques (en ordonnées) des composants des mélanges gazeux de protection en fonction de la température (en abscisses). La conductivité thermique est définie comme étant la vitesse à laquelle se propage la chaleur par conduction à travers une surface unité, normale à la direction du flux de chaleur, et cela par unité de longueur et unité de différence de température. Elle contrôle donc le transfert de chaleur par conduction et a un impact sur la morphologie du cordon, la température du bain de soudage et le mouillage.

On peut observer sur la figure 2 que l'hélium et l'hydrogène ont des conductivités thermiques plus élevées que celle de l'argon et permettront d'obtenir des arcs plus énergétiques.

Le Tableau 1 ci-après donne les compositions (% en volume) des différents gaz G1 a G9 qui ont été testes en soudage TIG double flux.

**Tableau 1**

| % en volume | Ar | H₂ | He | CO₂ | O₂ (*) |
|---|---|---|---|---|---|
| G1 | 100 | / | / | / | / |
| G2 | 98 | 2 | / | / | / |
| G3 | 95 | 5 | / | / | / |
| G4 | 99 | / | / | 1 | / |
| G5 | 98 | / | / | 2 | / |
| G6 | 95 | / | / | 8 | / |
| G7 | 99 | / | / | / | 1 |
| G8 | 98.5 | / | / | / | 1.5 |
| G9 | 80 | / | 20 | / | / |

| | | | | | |
|---|---|---|---|---|---|
| * (non couvert par la presente invention) | | | | | |

Le Tableau 2 ci-après consigne les résultats obtenus en termes de vitesse de soudage (Vs) limite avant apparition du phénomène de « humping » sur des pièces en acier A42 ayant une épaisseur de 1,5 mm, en utilisant une torche automatique de soudage TIG double flux classique munie d'une électrode non fusible pointue de 3.2 mm de diamètre en tungstène cérié de type W-2% CeO₂, avec hauteur d'arc d'environ 2 mm et intensité de soudage de l'ordre de 200 A et en utilisant différents associations des gaz G1 à G9.

**Tableau 2**

| Essai n° | 1 (*) | 2 (*) | 3 (*) | 4 (*) | 5 (*) | 6 (*) | 7 (*) | 8 (*) | 9 (*) | 10 (*) | 11 | 12 (*) | 13 (*) | 14 (*) |
|---|---|---|---|---|---|---|---|---|---|---|---|---|---|---|
| Gaz central | G1 | G2 | G5 | G9 | G1 | G1 | G1 | G1 | G1 | G3 | G3 | G3 | G3 | G3 |
| Gaz annulaire | G1 | G1 | G1 | G1 | G4 | G5 | G6 | G7 | G8 | G4 | G5 | G6 | G7 | G8 |
| Vs max (cm/min) | 200 | 200 | 230 | 220 | 220 | 250 | 220 | 250 | 240 | 250 | 300 | 220 | 300 | 240 |

Il ressort du Tableau 2 que le couple G3/G5 (essai 11) selon l'invention offre les meilleures performances tant en termes d'augmentation de vitesse et de limitation des oxydes présents en surface. En fait, avec ces associations particulières de gaz, il existe un effet tensioactif couplé à une augmentation du volume de métal fondu et à une élévation de la température du bain, ce qui va dans le sens d'un renforcement de la convection de Marangoni puisque celle-ci est alors dirigée vers le centre du cordon. Par conséquent, un équilibre des pressions se forme sur la zone de transition qui est modifiée puisque la pression du bain de soudage est augmentée. Le bain présente une meilleure aptitude au mouillage donc les zones sèches sont plus rapidement recouvertes. Enfin, le bain plus chaud se solidifie plus lentement.

Ces essais 11 et 13 confirment donc l'intérêt à travailler avec une teneur en CO₂ bien inférieure à environ 3% (le reste étant de l'argon), de préférence une teneur en CO₂ inférieure à 2,5 %, avantageusement des teneurs de l'ordre de 2% en CO₂, associées à un flux central d'argon et d'hydrogène entre 2 à 8%, de préférence une teneur en H₂ entre 4 et 7%, avantageusement de l'ordre de 5% en H₂.

En effet, comme le montrent les essais 12 et 14, l'utilisation de gaz annulaires trop fortement chargés en oxydant, engendre une dégradation des performances par l'apparition d'un film d'oxyde sur les pièces soudées. Or, ce film d'oxydes contrarie l'effet tensioactif par une élévation de la viscosité, voire conduit à une apparition de tâches noires plus ou moins importantes sur les cordons de soudage.

Pour éviter ces phénomènes néfastes, on évite d'utiliser en tant que gaz annulaire, un mélange gazeux trop fortement oxydant.

De là, conformément à l'invention, on limite la teneur en CO₂ à 3%, voire même à moins de 2.5% en CO₂.

De même, il est important de choisir avec soin la composition du mélange gazeux contenant de l'hydrogène et de l'argon utilisé en tant que gaz central.

En effet, l'hydrogène est un des facteurs provoquant la fissuration à froid (nuances ferritiques) et peut être aussi la cause de porosités. Il est donc nécessaire d'établir la compatibilité métallurgique (aciers non trempants et aciers inoxydables austénitiques) du mélange gazeux utilisé et donc de contrôler strictement la teneur en H₂ présent dans ledit mélange.

Pour ce faire, des essais comparatifs complémentaires ont été effectués, dans les mêmes conditions opératoires que précédemment, mais avec différentes couples de gaz (cf. Tableau 3 ci-après) de manière notamment à déterminer la (les) meilleure teneur en H₂ à utiliser et à confirmer que l'oxygène avait un effet ou non équivalent au CO₂ dans le gaz annulaire par comparaison avec les résultats obtenus pour le couple G3/G4 du Tableau 3.

**Tableau 3**

| Gaz central | Ar + 2% H₂ | Ar + 5% H₂ | Ar + 5% H₂ |
|---|---|---|---|
| Gaz annulaire | Ar+ 1% CO₂ | Ar + 1% O₂ | Ar + 1.5% O₂ |
| Vs maximale | Inférieure à celle obtenue avec G3 | Approx. égale à celle obtenue avec G4 | Inférieure à celle obtenue avec G4 |

| | | | |
|---|---|---|---|
| (% en volume) | | | |

Les résultats obtenus montrent que :
- un flux central contenant seulement 2% en volume de H₂ dans de l'argon (au lieu de 5% de H₂ pour G3) conduit à l'obtention d'une vitesse limite inférieure par rapport à celle obtenue avec le couple G3/G4. En limitant la teneur en hydrogène, on limite l'effet sur l'apport en chaleur à la tôle et on perd à la fois en volume de bain et en gradient de température. De là, on préférera utiliser des teneurs en H₂ d'au moins 2% en volume, de préférence encore supérieure à 3%, voire supérieure à 3.5%, avantageusement entre 4 et 8%.
- lorsque le flux central est G3 (Ar + 5% H₂) et que le flux annulaire périphérique est
   remplacé par un mélange d'argon et d'oxygène (non couvert par la presente invention), alors une teneur volumique de 1% en O₂ conduit à des résultats sensiblement équivalents en termes de vitesse que G4 (Ar + 1% CO₂),
   alors qu'une augmentation de la teneur en O₂ jusqu'à 1,5% dans le gaz annulaire distribué en périphérie, engendre une diminution des performances de vitesse et l'aspect du cordon est également dégradé. En effet, tous les sites disponibles sont déjà occupés par les atomes d'oxygène solubles et les atomes solubles supplémentaires ne servent qu'à créer des oxydes. Il n'existe donc pas d'effet positif sur la convection de Marangoni et, l'inverse, on assiste à une apparition de plaques d'oxydes néfastes qui vont dans le sens d'un accroissement des tensions de surface et pénalisent l'aspect du cordon. Aux températures qui existent en périphérie de l'arc, le CO₂ se dissocie totalement et travailler avec un gaz contenant 1% d'O₂ est équivalent à travailler avec un gaz contenant 2% de CO₂. De là, la teneur en O₂ dans le flux de gaz annulaire ne doit pas dépasser 1,5% en volume, de préférence on utilisera une teneur en O₂ inférieure ou égale à 1,3%, voire inférieure ou égale à 1,2%. Une teneur en oxygène de l'ordre de 1% est particulièrement bien adaptée.

Le procédé de l'invention est particulièrement adapté au soudage des tôles automobiles, tels les flancs raboutés ou « *tailoned blanks ».*

## Revendications

1. Procédé de soudage à l'arc électrique mettant en oeuvre une torche de soudage à l'arc munie d'une électrode, dans lequel un flux de gaz central est délivré au contact de l'électrode et un flux de gaz annulaire est délivré périphériquement audit premier flux de gaz, **caractérisé en ce que** :
le flux de gaz central est constitué uniquement d'argon et d'hydrogène (H₂), la teneur en hydrogène étant comprise entre 2 et 8 % en volume, et
le flux de gaz de gainage est constitué uniquement d'argon et de 1.8 à 3% en volume de dioxyde de carbone (CO₂).

2. Procédé selon la revendication 1, **caractérisé en ce que** le flux de gaz central est formé d'au moins 3 % en volume d'hydrogène et d'argon pour le reste.

3. Procédé selon l'une des revendications précédentes, **caractérisé en ce que** le flux de gaz central est formé d'au moins 4 % en volume d'hydrogène et d'argon pour le reste.

4. Procédé selon l'une des revendications précédentes, **caractérisé en ce que** le flux de gaz central est formé d'au plus 7 % en volume d'hydrogène et d'argon pour le reste.

5. Procédé selon l'une des revendications précédentes, **caractérisé en ce que** le flux de gaz de gainage est constitué uniquement d'argon et de 1.8 à 2,5% en volume de dioxyde de carbone (CO₂).

6. Procédé selon l'une des revendications précédentes, **caractérisé en ce que** la torche de soudage à l'arc est munie d'une électrode non fusible en tungstène.

7. Procédé selon l'une des revendications précédentes, **caractérisé en ce que** l'on soude une ou plusieurs pièces en acier.

8. Procédé selon l'une des revendications précédentes, **caractérisé en ce que** l'on soude une ou plusieurs pièces en acier comprenant un revêtement surfacique de zinc ou d'aluminium.

9. Procédé selon l'une des revendications précédentes, **caractérisé en ce que** la ou les pièces à souder sont choisies parmi les flancs raboutés.

10. Procédé selon l'une des revendications précédentes, **caractérisé en ce que** l'on soude à une vitesse d'au moins 2 m/min.

## Patentansprüche

1. Verfahren zum Lichtbogenschweißen durch die Betätigung eines Lichtbogenschweißbrenners, ausgestattet mit einer Elektrode, wobei ein zentraler Gasfluss in Kontakt mit der Elektrode abgegeben wird und ein ringförmiger Gasfluss peripher zu dem ersten Gasfluss abgegeben wird, **dadurch gekennzeichnet, dass** der zentrale Gasfluss ausschließlich aus Argon und Wasserstoff (H₂) besteht, wobei der Wasserstoffgehalt zwischen 2 und 8 Vol.-% liegt und der Mantelgasstrom ausschließlich aus Argon und aus 1,8 bis 3 Vol.-% Kohlendioxyd (CO₂) besteht.

2. Verfahren nach Anspruch 1, **dadurch gekennzeichnet, dass** der zentrale Gasfluss aus mindestens 3 Vol.-% Wasserstoff und dem Rest Argon gebildet ist.

3. Verfahren nach einem der vorhergehenden Ansprüche, **dadurch gekennzeichnet, dass** der zentrale Gasfluss aus mindestens 4 Vol.-% Wasserstoff und dem Rest Argon gebildet ist.

4. Verfahren nach einem der vorhergehenden Ansprüche, **dadurch gekennzeichnet, dass** der zentrale Gasfluss aus höchstens 7 Vol.-% Wasserstoff und dem Rest Argon gebildet ist.

5. Verfahren nach einem der vorhergehenden Ansprüche, **dadurch gekennzeichnet, dass** der Mantelgasstrom ausschließlich aus Argon und aus 1,8 bis 2,5 Vol.-% Kohlendioxyd (CO₂) besteht.

6. Verfahren nach einem der vorhergehenden Ansprüche, **dadurch gekennzeichnet, dass** der Lichtbogenschweißbrenner mit einer nicht schmelzbaren Elektrode aus Wolfram ausgestattet ist.

7. Verfahren nach einem der vorhergehenden Ansprüche, **dadurch gekennzeichnet, dass** ein oder mehrere Stücke aus Stahl geschweißt werden.

8. Verfahren nach einem der vorhergehenden Ansprüche, **dadurch gekennzeichnet, dass** ein oder mehrere Stücke aus Stahl geschweißt werden, umfassend eine Oberflächenbeschichtung aus Zink oder aus Aluminium.

9. Verfahren nach einem der vorhergehenden Ansprüche, **dadurch gekennzeichnet, dass** das oder die zu schweißenden Stücke ausgewählt sind aus den zusammengefügten Flanken.

10. Verfahren nach einem der vorhergehenden Ansprüche, **dadurch gekennzeichnet, dass** mit einer Geschwindigkeit von mindestens 2 m/min geschweißt wird.

## Claims

1. Electric arc welding method using an arc-welding torch provided with an electrode, in which a central gas flow is delivered in contact with the electrode and an annular gas flow is delivered peripherally to said first gas flow,
the central gas flow consists solely of argon and hydrogen (H₂), the proportion of hydrogen being between 2% and 8% by volume, and
the sheathing gas flow consists solely of argon and 1.8% to 3% by volume of carbon dioxide (CO₂).

2. Method according to claim 1, **characterised in that** the central gas flow is formed by at least 3% by volume of hydrogen and argon for the remainder.

3. Method according to one of the preceding claims, **characterised in that** the central gas flow is formed by at least 4% by volume of hydrogen and argon for the remainder.

4. Method according to one of the preceding claims, **characterised in that** the central gas flow is formed by no more than 7% by volume of hydrogen and argon for the rest.

5. Method according to one of the preceding claims, **characterised in that** the sheathing gas flow consist solely of argon and 1.8% to 2.5% by volume of carbon dioxide (CO₂).

6. Method according to one of the preceding claims, **characterised in that** the arc welding torch is provided with a non-fusible tungsten electrode.

7. Method according to one of the preceding claims, **characterised in that** one or more steel parts are welded.

8. Method according to one of the preceding claims, **characterised in that** one or more steel parts comprising a surface coating of zinc or aluminium are welded.

9. Method according to one of the preceding claims, **characterised in that** the part or parts to be welded are chosen from sides butted together.

10. Method according to one of the preceding claims, **characterised in that** welding is carried out at a speed of at least 2 m/minute.
